Europäisches Patentamt

European Patent Office

Office européen des brevets

(19)

(11) **EP 1 578 140 A2**

(12) **EUROPEAN PATENT APPLICATION**

(43) Date of publication:
**21.09.2005 Bulletin 2005/38**

(51) Int Cl.$^7$: **H04N 9/64**, H04N 9/11

(21) Application number: **04364022.6**

(22) Date of filing: **19.03.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(71) Applicant: **Thomson Licensing S.A.**
**92100 Boulogne-Billancourt (FR)**

(72) Inventor: **Yeung, Raymond c/o Thomson**
**92648 Boulogne Cedex (FR)**

(74) Representative: **Le Dantec, Claude et al**
**46, Quai Alphonse Le Gallo**
**92100 Boulogne-Billancourt (FR)**

(54) **System and method for color management**

(57)     The invention provides a color processing system comprising an image capture device for capturing a scene and providing first color image data representative of the scene.

A color space transformer is coupled to the image capture device for transforming the first color image data to second color image data. A first display device is coupled to the color transformer. The first display device displays the scene as represented by the second color image data. The color transformer includes a processor programmed to perform a matrix operation upon the first color image data by selecting matrix elements from a look up table (LUT) comprising pre-computed values.

**FIGURE 2**

## Description

## Background of the Invention

Film is the typically preferred recording medium on which to originate motion pictures. There are several reasons for this preference. First, film provides a sophisticated visual impression due to the character of film stocks' color response. Also, viewing audiences are familiar with the appearance resulting from filmed material as it is projected onto a screen by a film projector. This film "look" is a product of a variety of factors. Such factors include photo-chemical processes associated with film, the quality and calibration of the film projector used to project the image, the characteristics of the screen upon which the image is projected, and the ambient lighting conditions in the viewing environment.

Recently, a wide variety of display devices and technologies have become available for displaying motion pictures to viewing audiences using media other than film, i.e., non film media. One of the challenges associated with these non-film technologies is that of maintaining the overall visual impression provided by the color response of film. The colors produced by a display device depend on the characteristics of that device, e.g., device dependent color space, and also to the environment in which an image will be displayed. Furthermore, different color imaging devices use different color spaces, and these are frequently different color spaces than the display devices.

Accordingly, a major task in color technology is to convert color specifications from one color space to another for the purpose of capture, display and reproduction of images in a way that preserves the artistic intent inherent in the color attributes of an original scene that is the source of the image.

For example, televisions use R, G and B (Red, Green and Blue) color space and printers use cmy (cyan, magenta, yellow) (or cmyk) color space. Another example color space is the "u'v'L*" space. The "u'v'L*" space is a three dimensional color space defined by the parameters u', v', L*. The chromaticity of each color in this space is uniformly characterized by the parameters u', v'. The third parameter, L*, denotes perceptually uniform variations in the lightness of the color, (e.g., L*=0 is black, L*=100 is white). To process a color image in the "u'v'L*" color space, a color processor simply maps each point u'.sub.0, v'.sub.0, L*.sub.0 in the color space to a new point u'.sub.1, v'.sub.1, L*.sub.1.

In this color space, image color is adjustable to compensate for lighting conditions of the room, the characteristics of the image displayer, and other variables. For example, to compensate for lighting conditions, a selectable transform maps each point u'.sub.0, v'.sub.0, L*.sub.0 to a new point having the same values u'.sub.0, v'.sub.0 but having greater luminance value L*.sub.1.

In addition to the device dependent color spaces, CIE (Commission Internationale de l'Eclairage) developed a series of color spaces using colorimetry to give a quantitative measure for all colors. The CIE descriptions are not dependent on imaging devices. CIE color spaces are defined in CIE publication 15.2.

The invention facilitates image processing and transform between device color spaces (print, projector, professional CRT). Further embodiments of the invention provide methods and apparatus for simulating device specific colors and color spaces. That is, embodiments of the invention allow viewing on a first device, a representation of colors that are not available on the first device. This allows a first device to simulate the look of a second device. Such a simulation is desirable for many reasons. In an example embodiment, a motion picture is captured or displayed by digital means and processed so as to have the appearance of having been captured or displayed on film. In another embodiment of the invention, digital projectors originally designed for high-definition TV projection are used as preview systems for digital intermediates. Further, the invention provides systems and methods for device calibration that enable digital data to appear on a display as it would if transferred to film and projected.

Furthermore, the invention provides systems and methods having high dynamic range and capable of accurate emulation of film output. These attributes provide and recover a consistent color experience regardless of the facility from which the work originates. Further, embodiments of the invention allow the color experience to be made consistent to a viewer over time and as display technology changes.

## Brief Description of the Drawings

Figure 1 is a block diagram of a color management system according to an embodiment of the invention.
Figure 2 is a process diagram depicting the steps of a method according to an embodiment of the invention.
Figure 3 is a schematic diagram illustrating look up table operations according to an embodiment of the invention.
Figure 4 is a block diagram of a color management system according to an alternative embodiment of the invention.
Figure 5 is a detailed block diagram showing a system according to an embodiment of the invention.
Figure 6 is a block diagram depicting a system according to an alternative embodiment of the invention.

**Detailed Description**

Terms and definitions. The following terms are defined as used herein. The term "device dependent" refers to color spaces used to encode device specific digital data at the device control level. Color spaces such as linear RGB and CMYK are useful for image scanning devices and image printing devices, respectively, since each parameter of the color space closely corresponds to a physical mechanism by which these devices measure and generate color.

For a variety of reasons, the device dependent color spaces are in some cases not well suited for processing color images. For example, the three parameters R, G, B define a three dimensional, linear color space, each point within the space corresponding to a unique color. At various points within the space, a selected change in the values of the parameters may not result in a commensurate change in the perceived color. For example, at one location in the space, increasing the parameter R by n units yields little perceived change in color. Yet, at another point in the space, increasing R by the same n units yields a dramatic change in the perceived color. Accordingly, it may be difficult for a human operator to manipulate the primaries R, G, B, to achieve a desired change in color.

The term "device independent" refers to visually non-uniform color spaces, that is, those that take human perception, e.g., color matching ability into consideration.
A variety of suitable, perceptually based color spaces have been proposed for defining color in terms of parameters which more closely correspond to the manner in which humans perceive color. The most prominent perceptually based standards for color representation are collectively referred to as the CIE system.

The term "color gamut mapping" refers in general to techniques that act on a color space to transform a color gamut of one color space to the color gamut of another color space. The term "color space transformation" refers to the process of transporting color information during image acquisition, display, and rendition.

Applicable Standards. ISO TC42 22028-1 is hereby incorporated by reference.

Table 1 identifies commercially available measurement devices (Spectrophotometer, densitometer, photometer, colorimeter) suitable for implementing various embodiments of the invention.

Table 1

| | |
|---|---|
| -GretagMacbeth | -FilmLight (old CFC) |
| •*X-rite Densitometer* | -Discreet Logic (incl. 5D) |
| •*Spectroscan* | -Discreet Logic (incl. 5D) |
| -PhotoResearch | -TI - Texas Instruments - Optical |
| •Metadata | assembly electronics w/ color lattice deformation |
| -CXF - Color exchange Format | |
| •Color transformation devices | •Calibration Equipment |
| -Digital Audio Video (DAV) | -Sequel |
| -Astro systems | -Spectrolino |
| -FilmLight (old CFC) | -Xrite |
| -Quantel | -Praxisoft |
| •Color correction / calibration | -Kodak |
| -Pandora - Pogle | -Barco |
| -DaVinci - 2K | -Graphic Technology |
| -ColorFront - Colossus film grading & finishing | -Telecine (HD or 2K/ 4K) |
| | -Viper FilmStream camera |

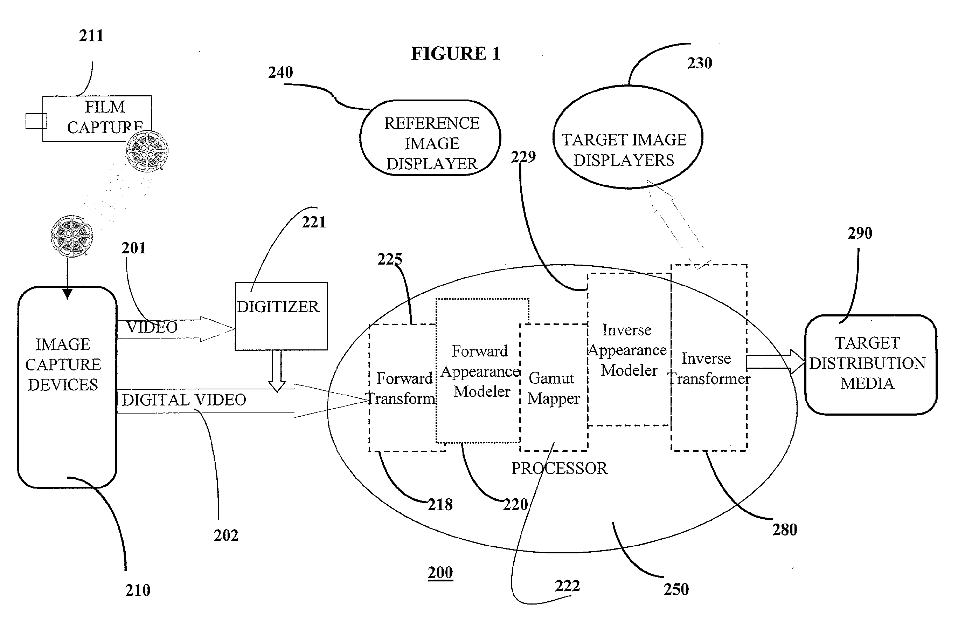

Fig. 1 is a block diagram illustrating a color management system 200 according to an embodiment of the invention. System 200 comprises a reference image subsystem comprising a reference image capture device 211 and a reference image displayer 240. In an embodiment of the invention, image capture device 211 is a motion picture camera capable of capturing images on film. In one embodiment of the invention reference image displayer 240 is a screen upon which the images captured by image capture device 211 are projected. In one embodiment of the invention system 200 includes a memory (not shown) for storing reference image data to be used as a reference image subsystem.

In an embodiment of the invention, the reference subsystem provides an "ideal" to which the color characteristics of processed images are matched to recreate the look of the image as if it were captured by the reference subsystem. In an embodiment of the invention, the characteristics of the reference image subsystem are simulated, that is, provided by hardware and software components in real time or during the production or post production processes. Alternative embodiments of the invention do not rely on actual hardware and software reference systems, but instead include "plug in" libraries corresponding to reference image subsystem characteristics. Thus, embodiments of the invention provide a plurality of selectable reference images. The reference image selected depends on the look desired for the target image.

For a given display means, constants exist that define the variations in display element (pixel in CRT or other in LCD, etc) response between film images and images originated by non film device, e.g., viper, digital, response when compared to between film and video originated images shot under identical lighting conditions, when viewed on video monitors. Therefore, embodiments of the invention employ a combination of filmed information as it can be reproduced on a monitor in order to provide the overall maintenance of the "film look". In embodiments of the invention separate color component combinations corresponding to each pixel of film originated image is utilized and employed by video originated images, though in response to a different photographic stimulus.

System 200 further comprises a target image subsystem comprising at least one image capture device 210 and a processor subsystem 250. Image capture device 210 captures and generates electronic representations of color images comprising a scene, e.g. a scene of a motion picture. In one embodiment of the invention, image capture device 210 provides digital video images. In an embodiment of the invention, the electronic image provided by capture device 210 comprises a two dimensional array of picture elements (pixels). The color of each pixel is represented in any of a variety of color spaces. For example, the RGB color space, and the CMYK color space are suitable.

In an alternative embodiment of the invention, analog video is provided by input device 210. In that case, a digitizer 221 converts the analog image provided by image capture device 210 to a digital representation. Accordingly, embodiments of the invention are capable of providing digital representations of video images by a variety of means. In one embodiment of the invention, digital representations are provided directly by a digital device, for example a digital camera or special effects (SFX) system. Alternatively, digitized representations of the captured color images are created by means of a digitization process. In one embodiment of the invention, capture device 210 comprises a film scanner. In an example of a scanner embodiment, capture device 210 performs a form of densitometry on the output of reference image (film) capture device 211. In an embodiment of the invention, the RGB values of the scanner are determined by the light transmitted through the film provided by capture device 211.

In one embodiment of the invention image capture devices 210 are selected from the group comprising analog video cameras, digital video cameras, telecine devices, film scanners and high definition film image capture devices. In an embodiment of the invention, video images are created from filmed images by means of a standard telecine "flying spot scanner" transfer.

The video data resulting from a telecine transfer defines filmed images in video terms. The resulting video images are suitable for display by CRT, LCD, or other display devices according to embodiments of the invention.

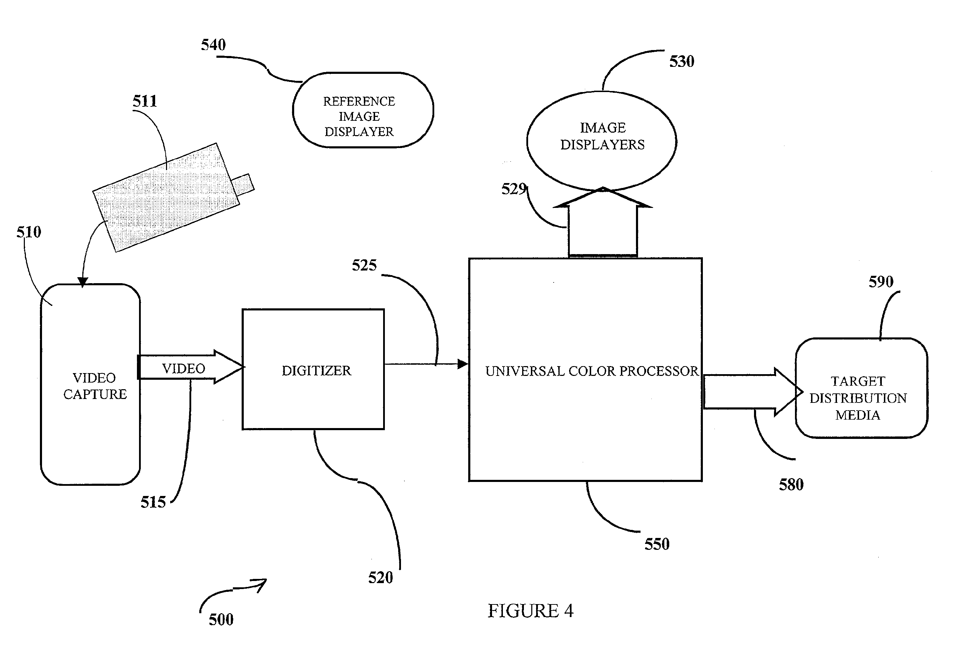

In an embodiment of the invention, a capture device provides device dependent color space representations of the captured image. Device dependent color spaces provide convenience of use, digital representation, and computation. However, device dependent color spaces typically do not relate to an objective definition of color, or to the way humans see color. Therefore, one embodiment of the invention includes a forward transformer 218. Forward transformer 218 accepts a digital representation of a captured image in a device dependent color space and transforms the digital representation of the image from a device dependent color space to a device independent color space, as illustrated in more detail in Figure 4 at 310. In an embodiment of the invention, forward device transformer 218 transforms a colorimetric (device specific) color space to a perceptual color space. In some embodiments of the invention, device transformer 118 is based on metadata and metrics for accurate and efficient color reproduction in a selected specific environment. For example, color profiling and practical modeling of displays and distribution formats of an environment are carried out and utilized by device transformer 118.

In addition, embodiments of the invention further comprise a forward appearance modeler 220. Forward appearance modeler applies an appearance model to the digital representation from forward transformer 218. That is, forward appearance modeler 220 processes the digital representation from forward transformer 218 so as to provide an image representation in accordance with perceptual characteristics of a human viewer. In an embodiment of the invention, color appearance modeler 220 provides a viewing condition specific method for transforming tristimulus values to and/or from perceptual attribute correlates. One color appearance model suitable for use in an embodiment of the invention is that outlined in specific CIECAM02.

In an embodiment of the invention, a plurality of color appearance models are selectable from a memory of system 200. In one embodiment, an operator selects a desired color appearance model to apply to the image representation. In an embodiment of the invention, color processor 250 includes at least one memory for storing predefined, re-adjustable device specific calibration data, including non linear color space transform models. In an embodiment of the invention, processor 250 further stores in memory other information for interpreting color values, for example, image state, reference image viewing environment, etc.

In one embodiment of the invention, the image representation provided by forward appearance modeler 220 is provided to a gamut mapper 222. Gamut mapper 222 maps the color gamut of an image input color space to the color gamut of a display image output color space. The output of gamut mapper 222 is provided to inverse appearance modeler 229. The output of inverse appearance modeler 229 is provided to inverse transformer 280. In an embodiment of the invention, inverse transformer 280 accounts for display specific characteristics.

In an embodiment of the invention forward transformer 225, forward appearance modeler 220, gamut mapper 222, inverse appearance modeler 229 and inverse transformer 280 are implemented in at least one processor 250 programmed to perform the respective functions of these components of system 200. In one embodiment the functions are carried out by a single processor. Alternative embodiments of the invention include distributed processors, i.e., processors embedded and/or distributed throughout the hardware components of system 200.

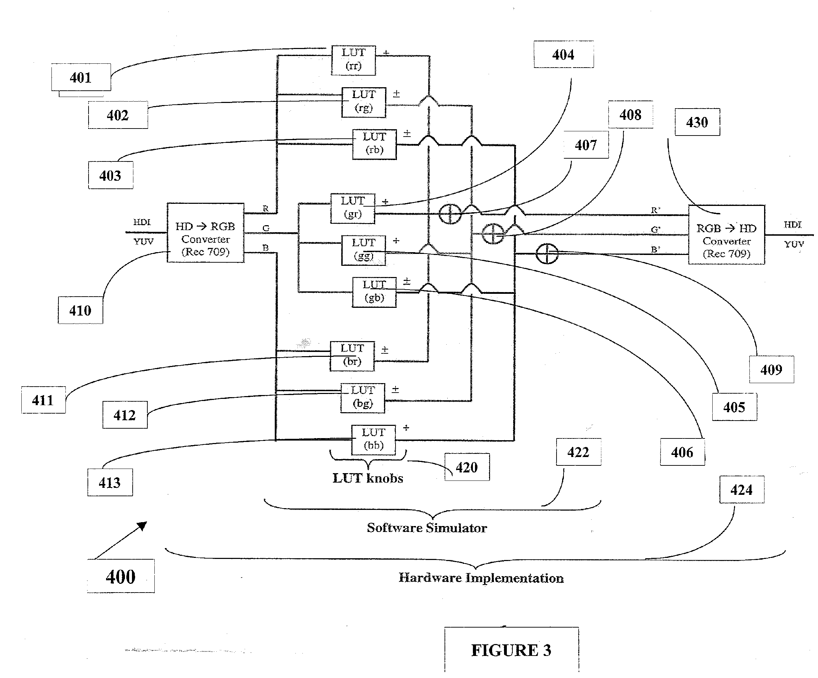

Processor 250 provides a processed image to at least one target image displayer 230. In that configuration, the processed image is displayed on a target image displayer 230 for comparison to the reference image displayed on reference image displayer 240. Embodiments of the invention comprise target image display devices 230 are selected from the group including, but not limited to, high definition television displays 233, standard definition television displays 231, digital cinema displays 232, Liquid Crystal Diode (LCD) displays 234 (including Liquid Crystal on Silcon LCoS) displays, and projection television displays. Embodiments of the invention include user operable color adjustment controls, for example, as illustrated in the LUT knobs of Figure 3.

In an embodiment of the invention processor 250, target image displayers 230 and reference image displayer 240 comprise a digital cinema mastering system 200. In one embodiment of the invention, target image displayer 230 comprises a digital cinema projector, for example, a Texas Instruments (TI) DLP-Cinema projector from Christie Digital (formerly Electrohome). The digital cinema projector, along with a lamp house, illuminates a motion picture screen to provide a target image display. For example a 10 ft. high by 24 ft. wide motion picture screen is employed in an embodiment of the invention. In an embodiment of the invention, the digital cinema projector is a DLP projector. In an embodiment of the invention the digital cinema target image projector is situated alongside a reference image displayer 240. In an embodiment of the invention, reference image displayer 240 comprises a standard 35 mm film projector 301 in a projection booth. In that configuration, side-by-side comparison and matching of the film print reference image to the digital target image is achieved using the system 200 of the invention.

In one embodiment of the invention, color processor 250 is operable via user controls to flexibly tune a target image in real time, for example in the room with a customer (allows real time changes). This is illustrated in Figure 10 at 1001. One embodiment of the invention allows color space to be adjusted with respect to viewing environment conditions (dark, dim, ambient lightingis provided to a color gamut mapper 260.

In an embodiment of the invention processor 250 for provides a color processed image master 290 to support media distribution. The color processed image master 290 will match the look of the reference image 240 when the processed master image 290 is copied and the copy is distributed and displayed on display devices having device characteristics similar to a selected target image displayer 230. Further embodiments of the invention include means for integrating computer generated images into a digital video master for distribution as illustrated at 290.

Therefore, the color reproduction of the captured image is one in which the colors depart from the appearance of those in the original image, for example absolutely or relative to white, in a way that gives a desired appearance.

In an embodiment of the invention, processor 250 remaps color characteristics of captured digital images so as to provide a transformed image having an appearance, or "look" of film. An embodiment of the invention performs the remapping step in real time. The transformed image is provided to a target image display device 230. Examples of target image display devices include D-Cinema projectors, high definition CRT monitors, computer monitors, LCD and LCOS displays or any display device.

In an embodiment of the invention processor 250 provides image data for creating digital masters (for target distribution media) 230 to be distributed and displayed in target display environments such as digital cinema movie theatres.

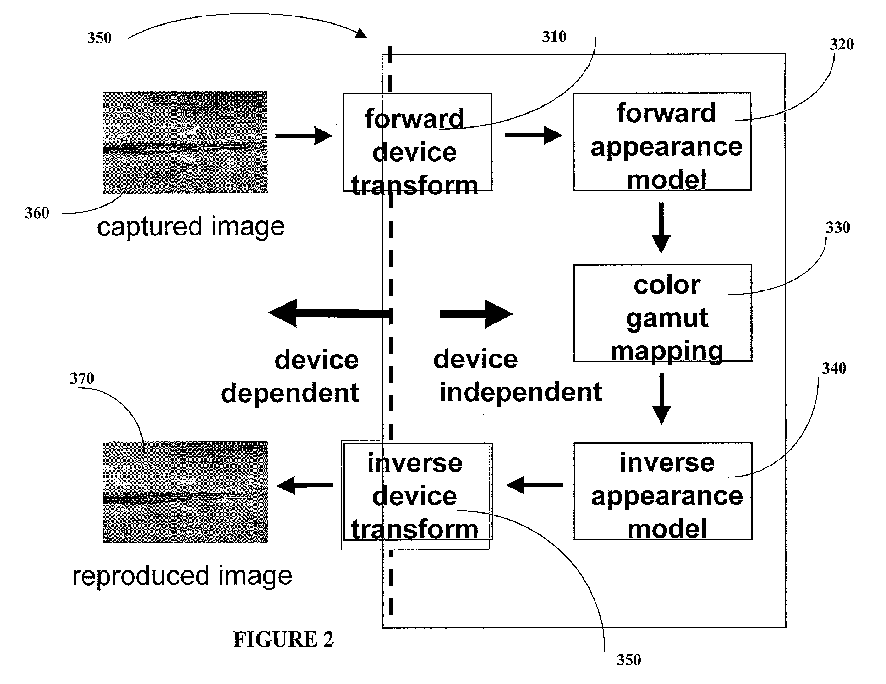

Figure 2 illustrates the steps of a method implemented by system 200 of Figure 1 according to one embodiment of the invention. In summary, the method comprises a forward device transform step 310 that calculates absolute, device independent colors (e.g. XYZ). A forward appearance model step 320 calculates what humans see (e.g. L*a*b*). A color gamut mapping step 330 reduces colors according to output device (e.g. film to TV). An inverse appearance model step 340 re-calculates absolute colors. An inverse device model step 350 calculates device-specific signals (e. g. RGB projector, RGB TV)

In an embodiment of the invention, a color image is captured with an image capture device as illustrated at 360 of Figure 2. The captured image is provided said to a first transformer where the image is transformed according to a forward device transform, as illustrated at 310. The forward device transform generates device-independent output image color data corresponding to the device dependent image data of the captured image.

The device independent output data is forward appearance adjusted based upon a forward color appearance model as illustrated at 320. This step accounts for human perceptual characteristics so as to provide perceptually enhanced color image data. The perceptually enhanced color image data is mapped in a color gamut matching step in accordance with characteristics of an output device. Thus color gamut mapped image data is provided by a color gamut mapping step as indicated at 330.

An appearance model inversing step 340, corresponding to the forward appearance modeling step indicated at 320, is performed on the color gamut mapped image data to provide perceptually reversed color image data. The appearance model reversed color image data is provided to a second device transform as indicated at 350. In an embodiment of the invention, the second device transform comprises an inverse of the first device transform indicated at 310. The second device transform step 350 provides a reproduced image as indicated at 370.

Figure 3 a functional diagram illustrating a color transformer 400 for performing color transformation steps carried out by system 200. Embodiments of the invention implement the algorithm in software and hardware, either entirely or in various combinations thereof. In an embodiment of the invention, the transformer operates in a real-time environment. This real time capability supports embodiments encompassing a wide variety of color management applications and color processing system designs.

One embodiment of transformer 400 comprises a Look Up Table (LUT) stored in a memory (not shown) and implements a 3X3 matrix operation (M). The LUT performs a look up operation (L). In an embodiment of the invention, color transformer 400 of Figure 3 is implemented by processor 250 of Figure 1. In one embodiment of the invention, the algorithm is carried out by employing memory look up and addition operations only, without the need for further types of operations. This approach results in significant computation savings compared to algorithms requiring additional processing operations.

As illustrated in Figure 3, for a pixel with values in R, G and B

$$R' = Mrr * Lr(R) + Mrg * Lg(G) + Mrb * Lb(B)$$

$$G' = Mgr * Lr(R) + Mgg * Lg(G) + Mgb * Lb(B)$$

$$B' = Mbr * Lr(R) + Mbg * Lg(G) + Mbb * Lb(B)$$

In an embodiment of the invention, the values of R, G, B and its corresponding LUT transformed values Lr(R), Lg(G), Lb(B) are between minimum and maximum digital values. Thus matrix elements can be looked up from pre-computed values stored in memory, since the elements are constants. In an embodiment of the invention, a linear matrix transform is implemented by a more general transform as follows:

$$R' = Mrr(Lr(R)) + Mrg(Lg(G)) + Mrb(Lb(B))$$

$$G' = Mgr(Lr(R)) + Mgg(Lg(G)) + Mgb(Lb(B))$$

$$B' = Mbr(Lr(R)) + Mbg(Lg(G)) + Mbb(Lb(B))$$

Therefore, each matrix element can be extended to a curve before multiplying by color values. Thus, the invention provides the capability for "bending" or otherwise modulating color spaces. In one embodiment of the invention, the transformer of Figure 3 is implemented in an FPGA, i.e., a hardware configuration. In an embodiment of the invention, the color transformer 400 operates in real time and is capable of application to a plurality of standard input/output formats, including, for example. HDSDI, and analog VGA. In an embodiment of the invention, color transformer 400 performs colorimetry transformation for a target display, for example, target image displayers 230 of Figure 1. In that embodiment, color transformer 400 is coupled between image capture device 210 and target image displayer 230 so as to operate on the image representation as image data is transferred from image source to display device. Embodiments of the invention achieve accuracy appropriate for a specific application by employing first or second or higher order polynomial approximation of the general transform.

In one embodiment of the invention, color transformer 400 couples a 10 bit RGB source to a 10 bit display. Embodiments of the invention utilize 8 bit processing techniques. Some embodiments perform a 2 bit shift on the input signal (division by 4). Furthermore, some embodiments of the invention utilize a 2 bits padding operation performed on the output signal (multiplication by 4).

In one embodiment of transformer 400 of Figure 3, scalars are replaced by Look-Up Tables (LUTs) in a matrix product operation. In such embodiments, for example, if (R,G,B) is an input triplet, the output triplet (R', G', B') is computed in accordance with:

$$\begin{pmatrix} R' \\ G' \\ B' \end{pmatrix} = \begin{pmatrix} L_{RR}(R) & L_{RG}(G) & L_{RB}(B) \\ L_{GR}(R) & L_{GG}(G) & L_{GB}(B) \\ L_{BR}(R) & L_{BG}(G) & L_{BB}(B) \end{pmatrix} \cdot \begin{pmatrix} R \\ G \\ B \end{pmatrix}$$

So as to implement the relationship:

$$\begin{cases} R' = L_{RR}(R).R + L_{RG}(G).G + L_{RB}(B).B \\ G' = L_{GR}(R).R + L_{GG}(G).G + L_{GB}(B).B \\ B' = L_{BR}(R).R + L_{BG}(G).G + L_{BB}(B).B \end{cases}$$

As each product depends only on one of R, G or B, it can be replaced by a more general LUT $L'$ writing: $L'_{RR}(R) = L_{RR}(R).R$, $L'_{RG}(G) = L_{RG}(G).G$, etc...
to implement the following equations:

$$\begin{cases} R' = L'_{RR}(R) + L'_{RG}(G) + L'_{RB}(B) \\ G' = L'_{GR}(R) + L'_{GG}(G) + L'_{GB}(B) \\ B' = L'_{BR}(R) + L'_{BG}(G) + L'_{BB}(B) \end{cases}$$

According to an embodiment of the invention, for each output value (R', G' or B') the processing steps implemented by transformer 400 comprise three look-up operations (one for R, one for G, one for B) followed by two additions. In one embodiment of the invention, each LUT table $L'_{XY}$ is coded using 8 bits. Diagonal elements ($L'_{RR}$, $L'_{GG}$, $L'_{BB}$) comprise unsigned values between 0 and 255. Off-diagonal elements ($L'_{RG}$, $L'_{RB}$, $L'_{GR}$, $L'_{GB}$, $L'_{BR}$, $L'_{BG}$) comprise signed values between -128 and +127. In one embodiment of the invention, the output values R', G' and B' are clipped between 0 and 255 (before 2 bits padding to be converted to 10 bits).

In an embodiment of the invention, transformer 400 is implemented as a Field Programmable Gate Array (FPGA) programmed in accordance with Figure 3 and connected to 1920x1080 10 bits in and out video interfaces.

In one embodiment of the invention, transformer 400 is initialized by uploading a file including the 9 Look-Up Tables $L'_{RR}$, $L'_{RG}$, $L'_{RB}$, $L'_{GR}$, $L'_{GG}$, $L'_{GB}$, $L'_{BR}$, , $L'_{BG}$, $L'_{BB}$ (in this order) of 256 values each.

Embodiments of system 200 (illustrated in Figure 1), include transformer 400 (illustrated in figure 3) so as to provide color consistency from capture by capture devices 210 through conversion of the captured image into the digital domain as illustrated at 201 and 221 of Figure 1. Embodiments of the invention further provide means for recovering initial color parameters at any step in the post-production chain, and provide seemless visual control at any step using for a plurality of selectable target displays (shown at 230 of figure 1). In that manner, a consistent color reference is utilized for file exchange accross facilities at any step of the process.

The invention reduces the amount of expensive colorist's work for each new version. One embodiment of the invention automatically adapts to different visual environments, for example, a theatre version for complete dark environment, a broadcast version with scene contrast compression (to see the dark scenes in a dark living room). A DVD version is between broadcast and theatre versions (customer may want to turn the lights down in the living room).

According to an embodiment of the invention a process for calibration includes the steps of providing a color management system 250. A computer, for example a personal computer, is programmed to apply measurement to the model to compute transformation parameters that will drive system 250. In an embodiment of the invention measurement tools and color patches are utilized to reduce the cost.

In an embodiment of the invention, an SGI "portable" workstation is employed to implement color transformer according to an embodiment of the invention. For a first adjustment step, an interface gives access to three curves depicting the Projector RGB versus the negative reading. In one embodiment of the invention 21 control points are adjustable on these curves with a linear interpolation between points. This is equivalent to a pure diagonal matrix derived from the film d.LogE RGB plots.

After the curves, two more matrices are applied successively on the RGB.

A primary matrix comprising a Hue, Saturation, Luminance (HSL) interface, (rotation around luminance axis + multiplicative coefficients along luminance and saturation axes). Provides the capability to tweak saturation. A secondary matrix having diagonal values fixed to 1.0 and with individual access to the 6 other non-diagonal coefficients (representing the cross-talks) is utilized by embodiments of the invention.

In this secondary matrix an action on each of the 6 non-diagonal coefficients is implemented as a LUT. This enables the creation of curves to vary the response depending on the input signal. When the action is carried out on the 6 coefficients, the diagonal values are adjusted to $1.0\pm\varepsilon$ so as to keep the overall scalar consistency of the operation. In an embodiment of the invention, vector scalar value remains constant during the secondary operation.

Embodiments of the invention employ the secondary matrix to control color cross-talk. In one embodiment of the invention, the combination of the three initial RGB LUTs, of the HSL controlled primary matrix and of the LUT based secondary matrix is synthesized in a single LUT matrix of the form:

$$\begin{cases} R' = L'_{RR}(R) + L'_{RG}(G) + L'_{RB}(B) \\ G' = L'_{GR}(R) + L'_{GG}(G) + L'_{GB}(B) \\ B' = L'_{BR}(R) + L'_{BG}(G) + L'_{BB}(B) \end{cases}$$

The synthesized LUTs matrix (i.e the nine LUTs $L'_{RR}$, $L'_{RC}$, $L'_{RB}$, $L'_{GR}$, $L'_{GG}$, $L'_{GB}$, $L'_{BR}$, $L'_{BG}$, $L'_{BB}$) are uploaded to the transformer to take effect on the display screen.

In an embodiment of the invention, Digital Projector calibration is performed by measuring the light output over a collection of patches with a PhotoResearch 650[1] photometer using 220 patches. The measures are carried out first on the Film Projector. The measures done on the Digital Projector are used to adjust the Digital Projector's setting to match the Film Projector results. In one embodiment of the invention, the Digital Projector is set up with the default "Cine" or "Theatre" setup.

One embodiment of the invention is automated and optimized to change emulations close to real time (i.e. switch from Fuji to Kodak stock). In an embodiment of the invention, emulation design is based on the color profiles results.

An embodiment of the invention is operable to allow for consistent automation of color recovery during creation of distribution masters from supermaster for a plurality of types, including but not limited to: High-end premium movies, SD-HD movies, SD/DVD, HD/DVD and TV Broadcast.

Figure 4 is a block diagram illustrating more detail of an embodiment of color processing system 200.

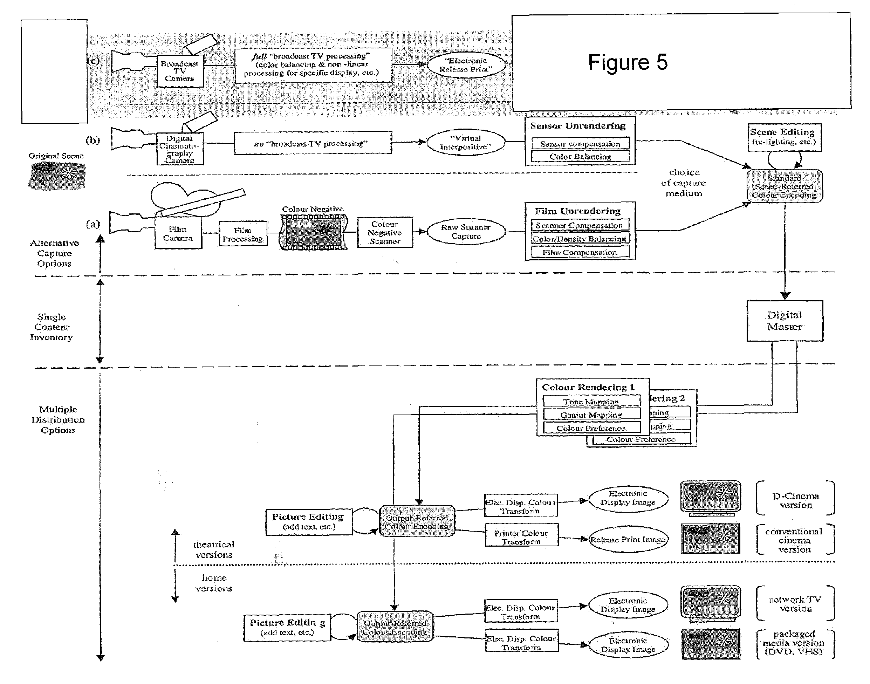

Figure 5 is a block diagram of a color management system according to an embodiment of the invention.

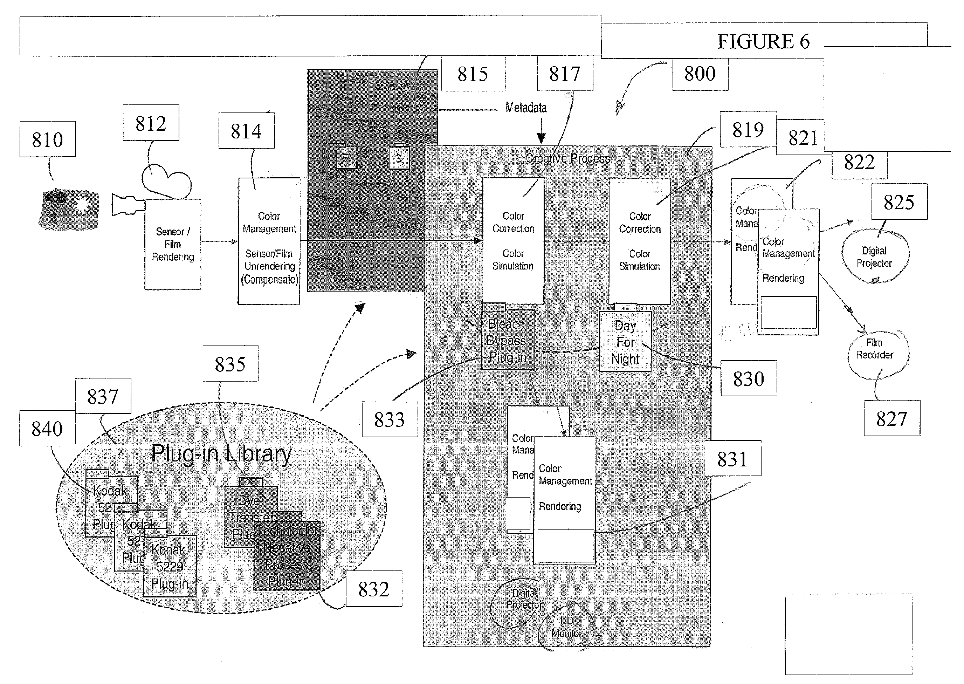

Figure 6 is a block diagram of a color management system 900 according to an embodiment of the invention.

While foregoing is directed to the preferred embodiment of the present invention, other and further embodiments of the invention may be devised without departing from the basic scope thereof, and the scope thereof is determined by the claims that follow.

**Claims**

1. A color system comprising an image capture device for capturing a scene and for providing first color image data representative thereof, a color transformer coupled to the image capture device for transforming the first color image data to second color image data, a first display device coupled to the color transformer, the first display device for displaying the scene as represented by the second color image data; the system **characterized by** the color transformer including a processor programmed to perform a matrix operation upon the first color image data by selecting matrix elements from a look up table comprising pre-computed values.

2. The color system of claim 1 wherein said color transformer is further **characterized by** operating on the first color image data (R,G,B) so as to provide second color image data (R'G'B') in accordance with the relationships:

$$R' = Mrr * Lr(R) + Mrg * Lg(G) + Mrb * Lb(B)$$

$$G'= Mgr * Lr(R) + Mgg * Lg(G) + Mgb * Lb(B)$$

$$B'= Mbr * Lr(R) + Mbg * Lg(G) + Mbb * Lb(B)$$

wherein R is a red value of said first color image, G is a green color value of said first color image, B is a blue color value of said first color image, M is a matrix operation and L is a look up table operation carried out upon red (R), green (G) and blue (B).

3. The color system of claim 2 wherein said color transformer is further **characterized by** values of R, G and B ranging between a minimum and maximum digital value.

4. The color system of claim 2 wherein the color transformer is further **characterized by** values of Lr(R), Lg(G) and Lb(B) ranging between maximum and minimum digital values.

5. The color system of claim 1 wherein said transform is further **characterized by** a processor programmed to operate on R, G and B values to provide transformed values R', G' and B' in accordance with the relationship:

$$R'= Mrr(Lr(R)) + Mrg(Lg(G)) + Mrb(Lb(B))$$

$$G'= Mgr(Lr(R)) + Mgg(Lg(G)) + Mgb(Lb(B))$$

$$B'= Mbr(Lr(R)) + Mbg(Lg(G)) + Mbb(Lb(B))$$

Wherein M is a matrix operation, Lr(R) is a Red look up value, Lg(G) is a green look up value and Lb(B) is a blue look up value.

6. The color system of claim 1 wherein said processor is further **characterized by** a 3X3 matrix operation.

7. A color image processing method comprising the steps of capturing and storing a digital color image, transforming said captured digital color image based upon characteristics of a selected capture device, processing said transformed captured color image according to an appearance model, the method **characterized by** steps of transforming said processed transformed captured color image data based upon characteristics of a first selected display device having first display device characteristics and displaying said processed transformed captured color image data on a second selected display device having second display device characteristics.

8. The color image processing method of claim 7 **characterized in that** said first selected display device characteristics differ from said second selected display device characteristics.

9. A method for reproducing color images comprising the steps of capturing a color image with an image capture device, providing said captured color image to a first transform, said first transform generating device-independent output image color data the method **characterized by** the steps of forward adjusting said device independent output image color data based upon human perceptual characteristics to provide perceptually enhanced color image data, mapping said perceptually enhanced color image data in accordance with characteristics of an output device to provide color gamut mapped image data, performing a reversing step of said forward adjusting step on said color gamut mapped image data to provide perceptually reversed color image data, and providing said perceptually reversed color image data to a second device transform, said second device transform being an inverse of said first device transform, said second device transform providing a reproduced image.

10. The method of claim 9 further **characterized by** steps of forward transforming said captured color image to provide device independent image data corresponding to said captured color image, forward adjusting said device independent image data based upon human perceptual characteristics to provide perceptually enhanced independent image data, gamut mapping the enhanced independent image data to provide gamut mapped image data, reversing the forward adjusting step for said gamut mapped image data step to provide perceptually reversed color image data, and reversing said forward transforming step for said perceptually reversed color image data to provide a color processed image.

11. A method for reproducing color images comprising the steps of capturing a color image with an image capture device, providing said captured color image to a first transform, said first transform generating device-independent output image color data, the method **characterized by** steps of forward adjusting said device independent output image color data based upon human perceptual characteristics to provide perceptually enhanced color image data, mapping said perceptually enhanced color image data in accordance with characteristics of an output device to provide color gamut mapped image data, performing a reversing step of said forward adjusting step on said color gamut mapped image data to provide perceptually reversed color image data, andproviding said perceptually reversed color image data to a second device transform, wherein said second device transform is an inverse of said first device transform, said second device transform providing a reproduced image.

12. A color processing method comprising the steps of capturing a color image, forward transforming the captured color image to provide device independent image data, forward adjusting the device independent image data based upon human perceptual characteristics to provide perceptually enhanced independent image data, gamut mapping the enhanced image data to provide gamut mapped image data, reversing the forward adjusting step to provide perceptually reversed color image data, and reversing the forward transforming step to provide a color processed image.

13. A color system for converting images into final color video images **characterized by**:

a first memory for storing at least one reference image having color characteristics corresponding to a first color appearance when said reference image is displayed on a reference display;
a second memory for storing at least one reproduced image having color characteristics corresponding to a second color appearance when said reproduced image is displayed on a target display;
a color processor coupled to said first and second memories, said color processor capable of automatically modifying color characteristics of said target image such said second color appearance substantially matches said first color appearance for a selected target display.

FIGURE 1

FIGURE 2

FIGURE 3

FIGURE 4

Figure 5

(c) Broadcast TV Camera

*full* "broadcast TV processing" (color balancing & non-linear processing for specific display, etc.)

"Electronic Release Print"

Original Scene

(b) Digital Cinematography Camera

*no* "broadcast TV processing"

"Virtual Interpositive"

**Sensor Unrendering**
| Sensor compensation |
| Color Balancing |

Scene Editing (re-lighting, etc.)

choice of capture medium

Standard Scene-Referred Colour Encoding

Alternative Capture Options

(a) Film Camera

Film Processing

Colour Negative

Colour Negative Scanner

Raw Scanner Capture

**Film Unrendering**
| Scanner Compensation |
| Color/Density Balancing |
| Film Compensation |

Single Content Inventory

Digital Master

Multiple Distribution Options

**Colour Rendering 1**
| Tone Mapping |
| Gamut Mapping |
| Colour Preference |

...ering 2
...ping
...ping
Colour Preference

Picture Editing (add text, etc.)

Output-Referred Colour Encoding

Elec. Disp. Colour Transform → Electronic Display Image → D-Cinema version

Printer Colour Transform → Release Print Image → conventional cinema version

theatrical versions

home versions

Picture Editing (add text, etc.)

Output-Referred Colour Encoding

Elec. Disp. Colour Transform → Electronic Display Image → network TV version

Elec. Disp. Colour Transform → Electronic Display Image → packaged media version (DVD, VHS)

EP 1 578 140 A2

FIGURE 6

810

812

Sensor / Film Rendering

814

Color Management

Sensor/Film Unrendering (Compensate)

815

817

Metadata

Creative Process

Color Correction

Color Simulation

Color Correction

Color Simulation

Bleach Bypass Plug-in

Day For Night

Color Management

Rendering

819

821

822

800

825

Digital Projector

827

Film Recorder

830

831

Color Management

Rendering

Digital Projector

HD Monitor

833

Plug-in Library

832

Technicolor Negative Process Plug-in

Dye Transfer Plug-in

835

Kodak 5229 Plug-in

Kodak 52 Plug-in

Kodak 52 Plug-in

837

840

16